# EUROPÄISCHE PATENTANMELDUNG

(11) **EP 2 944 866 A1**
(43) Veröffentlichungstag der Anmeldung: **18.11.2015**
(21) Anmeldenummer: 14167977.9
(22) Anmeldetag: 12.05.2014
(51) Int. Cl.: F21V 8/00, G02B 6/00

(54) **Optikeinheit, Anzeigeeinrichtung, Rückblickvorrichtung und Kraftfahrzeug damit**

(71) Anmelder: SMR Patents S.à.r.l., 1653 Luxembourg (LU)
(72) Erfinder: Fritz, Daniel, 70374 Stuttgart (DE)
(74) Vertreter: Weber-Bruls, Dorothée

(57) **Zusammenfassung**

Die Erfindung betrifft eine Optikeinheit (2) für eine Anzeigeeinrichtung eines Kraftfahrzeugs mit mindestens einem Lichtleitkörper, der mindestens einen Einkoppelabschnitt (8), durch den von mindestens einem Leuchtmittel (10) emittiertes Licht in den Lichtleitkörper (4) einkoppelbar, und der mindestens einen Auskoppelabschnitt (12) umfasst, durch den Licht aus dem Lichtleitkörper (4) auskoppelbar ist, und mit mindestens einem Optikmittel (16), das zumindest abschnittsweise den mindestens einen Auskoppelabschnitt (12) des Lichtleitkörpers flächenhaft überfangend am Lichtleitkörper (4) festlegbar oder festgelegt ist und das mindestens ein Optikelement (18) umfasst, durch welches ein Strahlengang zumindest des durch das Optikelement (18) hindurchtretenden Lichts umlenkbar und/oder in Lichtbündel aufteilbar, insbesondere streubar ist. Sie zeichnet sich dadurch aus, dass das Optikmittel (16) eine Mehrzahl an Optikelementen (18) umfasst, die sich in ihrem Brechungs- und/oder Reflexionsverhalten bei gleichem oder abweichendem Abstand zum Einkoppelabschnitt (8) des Lichtleitkörpers entsprechen bzw. unterscheiden.

## Beschreibung

Die Erfindung betrifft eine Optikeinheit für eine Anzeigeeinrichtung eines Kraftfahrzeugs mit mindestens einem Lichtleitkörper, der mindestens einen Einkoppelabschnitt, durch den von mindestens einem Leuchtmittel emittiertes Licht in den Lichtleitkörper einkoppelbar, und der mindestens einen Auskoppelabschnitt umfasst, durch den Licht aus dem Lichtleitkörper auskoppelbar ist, und mit mindestens einem Optikmittel, das zumindest abschnittsweise den mindestens einen Auskoppelabschnitt des Lichtleitkörpers flächenhaft überfangend am Lichtleitkörper festlegbar oder festgelegt ist und das mindestens ein Optikelement umfasst, durch welches ein Strahlengang zumindest des durch das Optikelement hindurchtretenden Lichts umlenkbar und/oder in Lichtbündel aufteilbar, insbesondere streubar ist. Darüber hinaus betrifft die Erfindung eine Anzeigeeinrichtung mit einer derartigen Optikeinheit, eine Rückblickvorrichtung mit einer derartigen Anzeigeeinrichtung und/oder mit einer derartigen Optikeinheit sowie ein Kraftfahrzeug mit einer derartigen Rückblickvorrichtung, mit einer derartigen Anzeigeeinrichtung und/oder mit einer derartigen Optikeinheit.

Anzeigeeinrichtungen für Rückblickvorrichtungen sind in Form von Totwinkelanzeigen in Außenspiegeln bekannt. Durch diese wird dem Fahrer eines Kraftfahrzeugs im Außenspiegel angezeigt, ob sich ein weiterer Verkehrsteilnehmer im Totwinkelbereich befindet und somit eine Entscheidungshilfe gegeben, ob ein Fahrmanöver, wie bspw. Abbiegen oder Überholen, aktuell risikobehaftet sein könnte.

Die bekannten Anzeigeeinrichtungen umfassen mindestens ein Leuchtmittel dessen abgestrahltes Licht in einen Lichtleitkörper eingeleitet wird und durch diesen derart umgelenkt und gestreut wird, dass das Licht durch eine Maske nach außen hindurchtreten kann und von dem Fahrzeugfahrer in Form eines durch die Maske gebildeten Symbols wahrnehmbar und interpretierbar ist. Bei den bekannten Anzeigeeinrichtungen hat es sich als umständlich herausgestellt, eine gleichmäßige Ausleuchtung der Anzeigeeinrichtung durch die Optikeinheit gewährleisten zu können, insbesondere für verschiedene Blickwinkel des Fahrers ausreichend hohe Leuchtdichten bereitstellen zu können.

Eine Aufgabe einer Ausführungsform der Erfindung ist, eine Optikeinheit bereitzustellen, mit der die Leuchtdichte, insbesondere einer Anzeigeeinrichtung, bei unterschiedlichen Blickrichtungen erhöht ist.

Diese Aufgabe wird bei einer eingangs genannten Optikeinheit dadurch gelöst, dass das Optikmittel eine Mehrzahl an Optikelementen umfasst, die sich in ihrem Brechungs- und/oder Reflexionsverhalten bei gleichem oder abweichendem Abstand zum Einkoppelabschnitt des Lichtleitkörpers entsprechen bzw. unterscheiden.

Der Auskoppelabschnitt kann dem Einkoppelabschnitt gegenüberliegend angeordnet sein. Wenn die Anzeigeeinrichtung in einer Rückblickvorrichtung angeordnet ist, ist der Auskoppelabschnitt an ein mehrschichtiges Reflexionsmittel, wie Spiegelfläche angrenzend angeordnet. Solchenfalls erfährt das von dem Leuchtmittel emittierte Licht durch den Lichtleitkörper eine Umlenkung um 90°. Zwischen einer Spiegeloberfläche des Reflexionsmittels und dem Lichtleitkörper ist eine den Lichtleitkörper überwiegend kaschierende Maske, durch deren Ausnehmungen das Licht nach Außen treten kann.

Dadurch, dass das Optikmittel eine Mehrzahl an Optikelementen umfasst, die sich in Brechungs- und/oder Reflexionsverhalten bei gleichen oder abweichenden Abstand zum Einkoppelabschnitt des Lichtleiters entsprechen bzw. unterscheiden wird das Licht an den unterschiedlichen Stellen innerhalb des Lichtleitkörpers unterschiedlich reflektiert, wodurch sich eine hohe Leuchtdichte für die unterschiedlichen Blickrichtungen ergibt.

Grundsätzlich ist es denkbar, dass die Mehrzahl an Optikelementen, die zum Einkoppelabschnitt den gleichen Abstand umfassen, sich in ihrem Brechungs- und/oder Reflexionsverhalten unterschieden. Es erweist sich jedoch als vorteilhaft, wenn eine Mehrzahl an Optikelementen, die den gleichen Abstand zum Einkoppelabschnitt des Lichtleitkörpers besitzen, sich in ihrem Brechungs- und/oder Reflexionsverhalten entsprechen.

Das mindestens eine Optikelement kann grundsätzlich eine beliebige Kontur umfassen. Es erweist sich als zweckmäßig, wenn das mindestens eine Optikelement einen n-eckigen, insbesondere pfeilförmigen, oder bogenförmigen, insbesondere kreisbogenförmigen, Querschnitt umfasst und/oder eine pyramiden- oder kalottenförmig oder elliptische Kontur umfasst.

Wenn das mindestens eine Optikelement einen n-eckigen Querschnitt umfasst ist, kann es prismaartig ausgebildet sein. Wenn es einen bogenförmigen, insbesondere kreisbogenförmigen Querschnitt umfasst, kann es linsenartig ausgebildet sein.

Der Querschnitt des mindestens einen Optikelements kann mit zunehmendem Abstand zum Einkoppelabschnitt zunehmen oder abnehmen. Durch den Querschnitt des Optikelements ist ein Brechungs- und Reflexionsverhalten des Optikelements definierbar. Entsprechend einer gewünschten Leuchtdichteverteilung ist diese hierdurch definierbar.

Es ist denkbar, dass der Auskoppelabschnitt des Lichtleitkörpers durch eine ebene Oberfläche gebildet ist. Bei einer Ausfiihrungsform der Optikeinheit erweist es sich jedoch als vorteilhaft, wenn der mindestens eine Auskoppelabschnitt des Lichtleitkörpers eine Mehrzahl an Auskoppelbereichen umfasst, die jeweils stufen- und/oder sägezahnartig zueinander versetzt angeordnet sind und an denen mindestens eines des mindestens einen Optikelements angeordnet sind. Hierdurch lässt sich die Leuchtdichte zusätzlich einstellen.

In Weiterbildung letztgenannter Ausfiihrungsform kann vorgesehen sein, dass an jeweils einem Auskoppelbereich eine Mehrzahl an Optikelementen angeordnet ist, die das gleiche Brechungs- und/oder Reflexionsverhalten umfassen und/oder den gleichen Querschnitt umfassen.

Darüber hinaus erweist es sich zur Einstellung der Leuchtdichte als vorteilhaft, wenn der Lichtleiter entlang einer Haupterstreckungsrichtung seine größte Erstreckung umfasst und dass die Auskoppelbereiche bei gleichem oder abweichendem Abstand zum Einkoppelabschnitt des Lichtleitkörpers eine gleiche bzw. jeweils eine unterschiedliche Neigung bezüglich der Haupterstreckungsrichtung aufweisen.

Darüber hinaus ist einer Ausführungsform vorgesehen, dass die Neigung der Auskoppelbereiche bezüglich der Haupterstreckungsrichtung mit zunehmenden Abstand zunimmt und/oder dass die Querschnitte der Mehrzahl an Optikelementen mit zunehmenden Abstand zum Einkoppelabschnitt zunehmen.

Um eine kompakte Ausbildung der Anzeigeeinrichtung gewährleisten zu können erweist es sich als vorteilhaft, wenn der mindestens eine Einkoppelabschnitt im Wesentlichen senkrecht zur Haupterstreckungsrichtung des Lichtleitkörpers verlaufend angeordnet ist.

Darüber hinaus kann vorgesehen sein, dass der Lichtleitkörper und das Optikmittel ein gemeinsames Bauteil, insbesondere Spritzgussteil, oder zwei separate und/oder separierbare Bauteile umfassen, insbesondere dass der Lichtleitkörper ein Spritzgussteil und das Optikmittel ein Spritzgussteil, eine Beschichtung und/oder eine Folie, umfasst.

Wenn der Lichtleitkörper und das Optikmittel ein gemeinsames Bauteil, insbesondere das Spritzgussteil, umfassen, ist es leicht und kostengünstig herstellbar.

Wenn der Lichtleitkörper und das Optikmittel zwei separate und/oder voneinander separierbare Bauteile umfassen, kann ein und derselbe Lichtleitkörper mit unterschiedlichen Optikmitteln, je nach Verwendungszweck, bestückt werden. Solchenfalls ist die Optikeinheit modular aufgebaut.

Darüber hinaus erweist es sich als vorteilhaft, wenn der mindestens eine Auskoppelabschnitt des Lichtleitkörpers eine Mehrzahl an Auskoppelbereichen umfasst, die sägezahnartig zueinander versetzt angeordnet sind, wobei ein, dem Einkoppelabschnitt nächstgelegener, erster Auskoppelbereich bezüglich der Haupterstreckungsrichtung einen ersten Neigewinkel umfasst, wobei ein an den ersten Auskoppelbereich auf dessen dem Einkoppelbereich abgewandten Seite angrenzender zweiter Auskoppelbereich bezüglich der Haupterstreckungsrichtung einen zweiten Neigewinkel umfasst, wobei ein an den zweiten Auskoppelbereich auf dessen dem Einkoppelbereich abgewandten Seite angrenzender dritter Auskoppelbereich bezüglich der Haupterstreckungsrichtung einen dritten Neigewinkel umfasst, und/oder wobei ein an einen (n)ten Auskoppelbereich auf dessen dem Einkoppelbereich abgewandten Seite angrenzender (n+1)ter Auskoppelbereich bezüglich der Haupterstreckungsrichtung einen (n+1) Neigewinkel umfasst.

Schließlich ist bei einer Ausfiihrungsform der Optikeinheit vorgesehen, dass das Optikelement einen kreisbogenförmigen Querschnitt umfasst, insbesondere eine Kalotte, wobei mindestens ein, insbesondere mehrere, am ersten Auskoppelbereich angeordnetes erstes Optikelement einen ersten Radius umfasst, wobei mindestens ein, insbesondere mehrere, am zweiten Auskoppelbereich angeordnetes zweites Optikelement einen zweiten Radius umfasst, wobei mindestens ein, insbesondere mehrere, am dritten Auskoppelbereich angeordnetes drittes Optikelement einen dritten Radius umfasst, und/oder wobei mindestens ein, insbesondere mehrere, an einem (n)ten Auskoppelbereich angeordnetes (n)tes Optikelement einen (n)ten Radius umfasst.

Ferner wird die Aufgabe gelöst durch eine Anzeigeeinrichtung für ein Kraftfahrzeug, die insbesondere in einer Rückblickvorrichtung, wie Innen- oder Außenspiegel, anordenbar ist, mit mindestens einem Leuchtmittel und mit mindestens einer Optikeinheit, insbesondere mit mindestens einem der zuvor genannten Merkmale, die mindestens einen Lichtleitkörper, der mindestens einen Einkoppelabschnitt, durch den von mindestens einem Leuchtmittel emittiertes Licht in den Lichtleitkörper einkoppelbar, und der mindestens einen Auskoppelabschnitt umfasst, durch den Licht aus dem Lichtleitkörper auskoppelbar ist, und die mindestens ein Optikmittel umfasst, das zumindest abschnittsweise den mindestens einen Auskoppelabschnitt des Lichtleitkörpers flächenhaft überfangend am Lichtleitkörper festlegbar oder festgelegt ist und das mindestens ein Optikelement umfasst, durch welches ein Strahlengang zumindest des durch das Optikelement hindurchtretenden Lichts umlenkbar und/oder in Lichtbündel aufteilbar, insbesondere streubar ist wobei das Optikmittel eine Mehrzahl an Optikelementen umfasst, die sich in ihrem Brechungs- und/oder Reflexionsverhalten bei gleichem oder abweichendem Abstand zum Einkoppelabschnitt des Lichtleitkörpers entsprechen bzw. unterscheiden.

Darüber hinaus wird die Aufgabe gelöst durch eine Rückblickvorrichtung, wie Innen- oder Außenspiegel, mit mindestens einer Anzeigeeinrichtung, insbesondere mit mindestens einem der zuvor genannten Merkmale, und/oder mit mindestens einer Optikeinheit, insbesondere mit mindestens einem der zuvor genannten Merkmale.

Schließlich wird die Aufgabe gelöst durch ein Kraftfahrzeug mit mindestens einer Rückblickvorrichtung, insbesondere mit mindestens einem der zuvor genannten Merkmale, wie Innen- oder Außenspiegel, mit mindestens einer Anzeigeeinrichtung, insbesondere mit mindestens einem der zuvor genannten Merkmale, und/oder mit mindestens einer Optikeinheit, insbesondere mit mindestens einem der zuvor genannten Merkmale.

Die Optikeinheit, die Anzeigeeinrichtung, die Rückblickvorrichtung sowie das Kraftfahrzeug erweisen sich in mehrfacher Hinsicht als vorteilhaft:

Dadurch, dass die Optikeinheit ein Optikmittel mit einer Mehrzahl an Optikelementen umfasst, die sich in Abhängigkeit des Abstands zu einem Einkoppelabschnitt des Lichtleitkörpers entsprechend bzw. unterscheiden ist eine Leuchtdichte des aus der Optikeinheit austretenden Lichts einstellbar.

Dadurch, dass der Auskoppelabschnitt des Lichtleitkörpers eine Mehrzahl an Auskoppelbereichen umfasst, die stufenartig oder sägezahnartig zueinander angeordnet sind, lässt sich das Einstellen der Leuchtdichte weiter verbessern.

Weitere Merkmale, Einzelheiten und Vorteile der Erfindung ergeben sich aus den beigefügten Patentansprüchen, aus der zeichnerischen Darstellung und der nachfolgenden Beschreibung. Bevorzugte Ausführungsformen der Optikeinheit.

In der Zeichnung zeigt:
- Fig. 1: eine geschnittene Seitenansicht auf ein erstes Ausführungsbeispiel der Optikeinheit;
- Fig. 2: eine Detailansicht eines Bereichs des ersten Ausführungsbeispiels der Optikeinheit gemäß Fig. 1
- Fig. 3: eine geschnittene Seitenansicht eines zweiten Ausführungsbeispiels der Optikeinheit;
- Fig. 4: eine schematische geschnittene Detailansicht eines Optikmittels gemäß des ersten Ausführungsbeispiels.

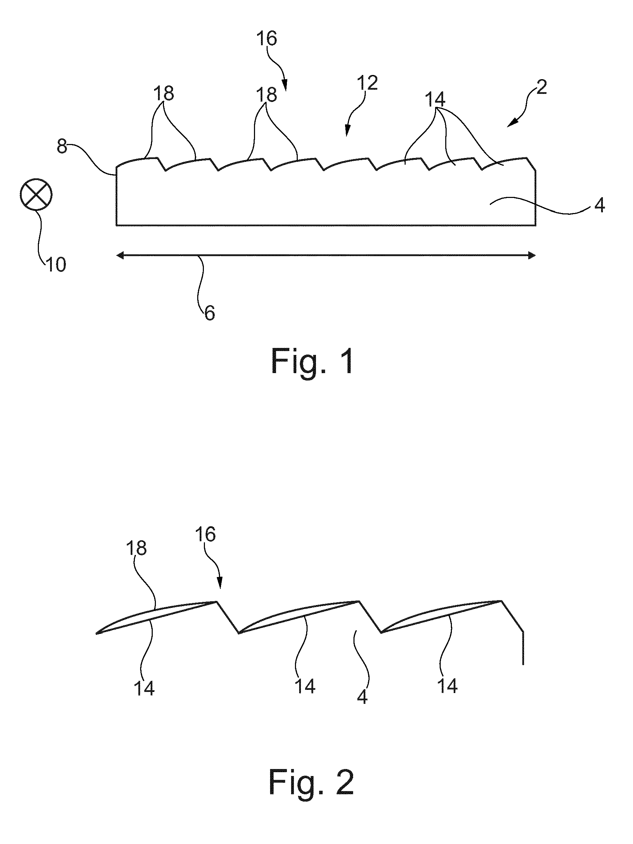

Fig. 1 zeigt ein erstes Ausführungsbeispiel der insgesamt mit dem Bezugszeichen 2 versehenen Optikeinheit für eine Anzeigeeinrichtung eines Kraftfahrzeugs. Die Optikeinheit 2 umfasst einen Lichtleitkörper 4, der sich entlang einer Haupterstreckungsrichtung 6 erstreckt, in der er seine größte Erstreckung umfasst. Mittels eines Einkoppelabschnitts 8 ist Licht eines Leuchtmittels 10 der Anzeigeeinrichtung in den Lichtleitkörper 4 einkoppelbar. Darüber hinaus umfasst der Lichtleitkörper 4 einen Auskoppelabschnitt 12, durch den das Licht aus dem Lichtleitkörper 4 auskoppelbar ist. Bei den in den Figuren ersichtlichen Ausführungsbeispielen umfasst der Auskoppelabschnitt 12 eine Mehrzahl an Auskoppelbereichen 14, die jeweils sägezahnartig zueinander versetzt angeordnet sind.

Darüber hinaus umfasst die Optikeinheit 2 ein Optikmittel 16, das zumindest absatzweise den Auskoppelabschnitt 12 des Lichtleitkörpers 4 flächenhaft überfangend am Lichtleitkörper 4 festgelegt ist. Das Optikmittel 16 umfasst eine Mehrzahl an Optikelementen 18, durch die ein Strahlengang des durch ein Optikelemente 18 hindurchtretenden Lichts umlenkbar und/oder in Lichtwinkel aufteilbar, insbesondere streubar ist. Die Mehrzahl an Optikelementen 18 unterscheiden sich in ihrem Brechung- und/oder Reflexionsverhalten in Abhängigkeit ihres Abstands zum Einkoppelabschnitt 8 des Lichtleitkörpers 4.

Fig. 1 ein erstes Ausführungsbeispiel der Optikeinheit 2 bei dem der Lichtleitkörper 4 und das Optikmittel 16 ein gemeinsames Bauteil umfassen. Solchenfalls ist die Optikeinheit 2 aus einem Spritzgussteil gebildet.

Die Mehrzahl an Optikelementen 18 des Optikmittels 16 umfassen einen kreisrunden Querschnitt sowie eine kalottenförmige Kontur. Hierbei nimmt der Querschnitt eines jeden Optikelements 18 mit zunehmenden Abstand zum Einkoppelabschnitt 8 zu. In den Figuren nicht ersichtlich sind an jedem Auskoppelbereich 14 eine Mehrzahl an im Wesentlichen parallel zueinander angeordneten Optikelementen 18 angeordnet, wobei jeweils die Optikelemente 18 an einem Auskoppelbereich 14 aneinander bzgl. ihres Brechungs- und/oder Reflexionsverhalten gleichen und insbesondere die gleiche Kontur und den gleichen Querschnitt umfassen.

Fig. 2 zeigt eine Detailansicht eines Bereichs des ersten Ausführungsbeispiels der Optikeinheit gemäß Fig. 1. Hierbei ist ersichtlich, dass die einzelnen Auskoppelbereiche 14 des Auskoppelabschnitts 12 des Lichtleitkörpers 4 sägezahnartig zueinander versetzt angeordnet sind. Ferner ist der kreisbogenförmige Querschnitt der Optikelemente 18 ersichtlich.

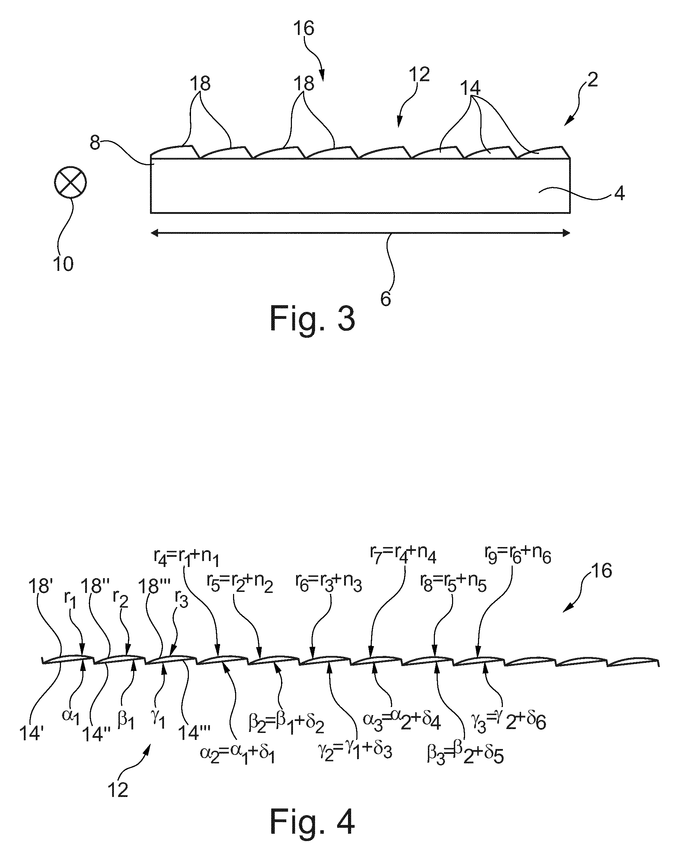

Fig. 3 zeigt ein zweites Ausführungsbeispiel der Optikeinheit 2. Gleiche Teile sind mit gleichen Bezugszeichen versehen. Das Ausführungsbeispiel gemäß Fig. 3 unterscheidet sich vom Ausführungsbeispiel gemäß 1 darin, dass der Lichtleitkörper 4 und das Optikmittel 18 aus zwei separaten Bauteilen gebildet ist. Solchenfalls umfasst das Optikmittel 16 bspw. ein Spritzgussteil, eine Beschichtung und/oder eine Folie.

Fig. 4 ist eine schematische Detailansicht des sägezahnartigen Aufbaus der Auskoppelbereiche 14 des Auskoppelabschnitts 12 sowie der Veränderung der Querschnitte der Optikelemente 18 des Optikmittels 16.

Wie in Fig. 4 ersichtlich, umfasst ein dem Einkoppelabschnitt 8 nächstgelegener erster Auskoppelbereich 14' bzgl. der Haupterstreckungsrichtung 6 des Lichtleitkörpers 4 einen ersten Neigewinkel α₁. Ein an den ersten Auskoppelbereich 14' auf dessen dem Einkoppelbereich 8 abgewandten Seite angrenzender zweiter Auskoppelbereich 14" umfasst bzgl. der Haupterstreckungsrichtung 6 des Lichtleitkörpers 4 einen zweiten Neigewinkel β₁. Ein an dem zweiten Auskoppelbereich 14" auf dessen dem Einkoppelbereich 8 abgewandten Seite angrenzender vierte Auskoppelbereich 14'" umfasst bzgl. der Haupterstreckungsrichtung 6 des Lichtleitkörpers 4 einen dritten Neigewinkel γ₁.

Bei dem in Fig. 4 gezeigten schematischen Darstellungen verändern sich alle weiteren Einkoppelbereiche 14ⁿ in Abhängigkeit des ersten Neigewinkels α₁, des zweiten Neigewinkels β₁ oder des dritten Neigewinkels γ₁ in Addition eines zusätzlichen Neigewinkels δ₁ bis δ₆. Hierbei können δ₁ bis δ₆ jeweils gleich oder unterschiedlich sein.

Darüber hinaus ist aus Fig. 4 ersichtlich, dass ein am ersten Auskoppelbereich 14' angeordnetes erstes Optikelement 18' einen Radius r₁ umfasst. Ein an dem zweiten Auskoppelbereich 14" angeordnetes zweites Optikelement 18" umfasst einen zweiten Radius r₂. Ein an dem dritten Auskoppelbereich 14"' angeordnetes drittes Optikelement 18'" umfasst einen Radius r₃. Alle darauf folgenden Optikelemente umfassen einen Radius, der sich aus einem der Radien r₁, r₂ oder r₃ plus einem Zusatzradius n₁ bis n₆ umfasst. Hierbei können n₁ bis n₆ einander entsprechen oder voneinander abweichen.

Die in der vorstehenden Beschreibung, den Ansprüchen sowie den Zeichnungen gezeigten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 2: Optikeinheit
- 4: Lichtleitkörper
- 6: Haupterstreckungsrichtung
- 8: Einkoppelabschnitt
- 10: Leuchtmittel
- 12: Auskoppelabschnitt
- 14: Auskoppelbereich
- 14': erster Auskoppelbereich
- 14": zweiter Auskoppelbereich
- 14"': dritter Auskoppelbereich
- 16: Optikmittel
- 18: Optikelement
- 18': erstes Optikelement
- 18": zweites Optikelement
- 18"': drittes Optikelement

## Patentansprüche

1. Optikeinheit (2) für eine Anzeigeeinrichtung eines Kraftfahrzeugs mit mindestens einem Lichtleitkörper, der mindestens einen Einkoppelabschnitt (8), durch den von mindestens einem Leuchtmittel (10) emittiertes Licht in den Lichtleitkörper (4) einkoppelbar, und der mindestens einen Auskoppelabschnitt (12) umfasst, durch den Licht aus dem Lichtleitkörper (4) auskoppelbar ist, und mit mindestens einem Optikmittel (16), das zumindest abschnittsweise den mindestens einen Auskoppelabschnitt (12) des Lichtleitkörpers flächenhaft überfangend am Lichtleitkörper (4) festlegbar oder festgelegt ist und das mindestens ein Optikelement (18) umfasst, durch welches ein Strahlengang zumindest des durch das Optikelement (18) hindurchtretenden Lichts umlenkbar und/oder in Lichtbündel aufteilbar, insbesondere streubar ist, **dadurch gekennzeichnet, dass** das Optikmittel (16) eine Mehrzahl an Optikelementen (18) umfasst, die sich in ihrem Brechungs- und/oder Reflexionsverhalten bei gleichem oder abweichendem Abstand zum Einkoppelabschnitt (8) des Lichtleitkörpers entsprechen bzw. unterscheiden.

2. Optikeinheit (2) nach Anspruch 1, **dadurch gekennzeichnet, dass** das mindestens eine Optikelement (18) einen n-eckigen, insbesondere pfeilförmigen, oder bogenförmigen, insbesondere kreisbogenförmigen, Querschnitt umfasst und/oder eine pyramiden- oder kalottenförmig oder elliptische Kontur umfasst.

3. Optikeinheit (2) nach Anspruch 1 oder 2, **dadurch gekennzeichnet, dass** der Querschnitt des mindestens einen Optikelements (18) mit zunehmenden Abstand zum Einkoppelabschnitt (8) zunimmt oder abnimmt.

4. Optikeinheit (2) nach mindestens einem der vorhergehenden Ansprüche, **dadurch gekennzeichnet, dass** der mindestens eine Auskoppelabschnitt (12) des Lichtleitkörpers eine Mehrzahl an Auskoppelbereichen(14) umfasst, die jeweils stufen- und/oder sägezahnartig zueinander versetzt angeordnet sind und an denen mindestens eines des mindestens einen Optikelements (18) angeordnet sind.

5. Optikeinheit (2) nach Anspruch 4, **dadurch gekennzeichnet, dass** an jeweils einem Auskoppelbereich (14) eine Mehrzahl an Optikelementen (18) angeordnet ist, die das gleiche Brechungs- und/oder Reflexionsverhalten umfassen und/oder den gleichen Querschnitt umfassen.

6. Optikeinheit (2) nach Anspruch 4 oder 5, **dadurch gekennzeichnet, dass** der Lichtleiter entlang einer Haupterstreckungsrichtung (6) seine größte Erstreckung umfasst und dass die Auskoppelbereiche (14) bei gleichem oder abweichendem Abstand zum Einkoppelabschnitt (8) des Lichtleitkörpers eine gleiche bzw. jeweils eine unterschiedliche Neigung bezüglich der Haupterstreckungsrichtung (6) aufweisen.

7. Optikeinheit (2) nach mindestens einem der vorhergehenden Ansprüche, **dadurch gekennzeichnet, dass** die Neigung der Auskoppelbereiche (14) bezüglich der Haupterstreckungsrichtung (6) mit zunehmenden Abstand zunimmt und/oder dass die Querschnitte der Mehrzahl an Optikelementen (18) mit zunehmenden Abstand zum Einkoppelabschnitt (8) zunehmen.

8. Optikeinheit (2) nach mindestens einem der vorhergehenden Ansprüche, **dadurch gekennzeichnet, dass** der mindestens eine Einkoppelabschnitt (8) im Wesentlichen senkrecht zur Haupterstreckungsrichtung (6) des Lichtleitkörpers verlaufend angeordnet ist.

9. Optikeinheit (2) nach mindestens einem der vorhergehenden Ansprüche, **dadurch gekennzeichnet, dass** der Lichtleitkörper (4) und das Optikmittel (16) ein gemeinsames Bauteil, insbesondere Spritzgussteil, oder zwei separate und/oder separierbare Bauteile umfassen, insbesondere dass der Lichtleitkörper (4) ein Spritzgussteil und das Optikmittel (16) ein Spritzgussteil, eine Beschichtung und/oder eine Folie, umfasst.

10. Optikeinheit (2) nach mindestens einem der vorhergehenden Ansprüche, **dadurch gekennzeichnet, dass** der mindestens eine Auskoppelabschnitt (12) des Lichtleitkörpers eine Mehrzahl an Auskoppelbereichen (14) umfasst, die sägezahnartig zueinander versetzt angeordnet sind, wobei ein, dem Einkoppelabschnitt (8) nächstgelegener, erster Auskoppelbereich (14') bezüglich der Haupterstreckungsrichtung (6) einen ersten Neigewinkel umfasst, wobei ein an den ersten Auskoppelbereich (14') auf dessen dem Einkoppelbereich abgewandten Seite angrenzender zweiter Auskoppelbereich (14") bezüglich der Haupterstreckungsrichtung (6) einen zweiten Neigewinkel umfasst, wobei ein an den zweiten Auskoppelbereich (14") auf dessen dem Einkoppelbereich abgewandten Seite angrenzender dritter Auskoppelbereich (14'") bezüglich der Haupterstreckungsrichtung (6) einen dritten Neigewinkel umfasst, und/oder wobei ein an einen (n)ten Auskoppelbereich (14) auf dessen dem Einkoppelbereich abgewandten Seite angrenzender (n+1)ter Auskoppelbereich(14) bezüglich der Haupterstreckungsrichtung (6) einen (n+1) Neigewinkel umfasst.

11. Optikeinheit (2) nach mindestens einem der vorhergehenden Ansprüche, **dadurch gekennzeichnet, dass** das Optikelement (18) einen kreisbogenförmigen Querschnitt umfasst, insbesondere eine Kalotte, wobei mindestens ein, insbesondere mehrere, am ersten Auskoppelbereich (14') angeordnetes erstes Optikelement (18') einen ersten Radius umfasst, wobei mindestens ein, insbesondere mehrere, am zweiten Auskoppelbereich (14") angeordnetes zweites Optikelement (18") einen zweiten Radius umfasst, wobei mindestens ein, insbesondere mehrere, am dritten Auskoppelbereich (14"') angeordnetes drittes Optikelement (18"') einen dritten Radius umfasst, und/oder wobei mindestens ein, insbesondere mehrere, an einem (n)ten Auskoppelbereich angeordnetes (n)tes Optikelement (18) einen (n)ten Radius umfasst.

12. Anzeigeeinrichtung für ein Kraftfahrzeug, die insbesondere in einer Rückblickvorrichtung, wie Innen- oder Außenspiegel, anordenbar ist, mit mindestens einem Leuchtmittel (10) und mit mindestens einer Optikeinheit (2), insbesondere nach einem der Ansprüche 1 bis 11, die mindestens einen Lichtleitkörper, der mindestens einen Einkoppelabschnitt (8), durch den von mindestens einem Leuchtmittel (10) emittiertes Licht in den Lichtleitkörper (4) einkoppelbar, und der mindestens einen Auskoppelabschnitt (12) umfasst, durch den Licht aus dem Lichtleitkörper (4) auskoppelbar ist, und die mindestens ein Optikmittel (16) umfasst, das zumindest abschnittsweise den mindestens einen Auskoppelabschnitt (12) des Lichtleitkörpers flächenhaft überfangend am Lichtleitkörper (4) festlegbar oder festgelegt ist und das mindestens ein Optikelement (18) umfasst, durch welches ein Strahlengang zumindest des durch das Optikelement (18) hindurchtretenden Lichts umlenkbar und/oder in Lichtbündel aufteilbar, insbesondere streubar ist, **dadurch gekennzeichnet, dass** das Optikmittel (16) eine Mehrzahl an Optikelementen (18) umfasst, die sich in ihrem Brechungs- und/oder Reflexionsverhalten bei gleichem oder abweichendem Abstand zum Einkoppelabschnitt (8) des Lichtleitkörpers entsprechen bzw. unterscheiden.

13. Rückblickvorrichtung, wie Innen- oder Außenspiegel, mit mindestens einer Anzeigeeinrichtung, insbesondere nach Anspruch 12, und/oder mit mindestens einer Optikeinheit (2), insbesondere nach einem der Ansprüche 1 bis 11.

14. Kraftfahrzeug mit mindestens einer Rückblickvorrichtung, wie Innen- oder Außenspiegel, insbesondere nach Anspruch 13, mit mindestens einer Anzeigeeinrichtung, insbesondere nach Anspruch 12, und/oder mit mindestens einer Optikeinheit (2), insbesondere nach einem der Ansprüche 1 bis 11.

## Geänderte Patentansprüche

### Geänderte Patentansprüche gemäss Regel 137(2) EPÜ.

1. Optikeinheit (2) für eine Anzeigeeinrichtung eines Kraftfahrzeugs mit mindestens einem Lichtleitkörper, der mindestens einen Einkoppelabschnitt (8), durch den von mindestens einem Leuchtmittel (10) emittiertes Licht in den Lichtleitkörper (4) einkoppelbar, und der mindestens einen Auskoppelabschnitt (12) umfasst, durch den Licht aus dem Lichtleitkörper (4) auskoppelbar ist, und mit mindestens einem Optikmittel (16), das zumindest abschnittsweise den mindestens einen Auskoppelabschnitt (12) des Lichtleitkörpers flächenhaft überfangend am Lichtleitkörper (4) festlegbar oder festgelegt ist und das mindestens ein Optikelement (18) umfasst, durch welches ein Strahlengang zumindest des durch das Optikelement (18) hindurchtretenden Lichts umlenkbar und/oder in Lichtbündel aufteilbar, insbesondere streubar ist, **dadurch gekennzeichnet, dass** das Optikmittel (16) eine Mehrzahl an Optikelementen (18) umfasst, die sich in ihrem Brechungs- und/oder Reflexionsverhalten bei gleichem oder abweichendem Abstand zum Einkoppelabschnitt (8) des Lichtleitkörpers entsprechen und im anderen Fall unterscheiden.

2. Optikeinheit (2) nach Anspruch 1, **dadurch gekennzeichnet, dass** das mindestens eine Optikelement (18) einen n-eckigen, insbesondere pfeilförmigen, oder bogenförmigen, insbesondere kreisbogenförmigen, Querschnitt umfasst und/oder eine pyramiden- oder kalottenförmig oder elliptische Kontur umfasst.

3. Optikeinheit (2) nach Anspruch 1 oder 2, **dadurch gekennzeichnet, dass** der Querschnitt des mindestens einen Optikelements (18) mit zunehmenden Abstand zum Einkoppelabschnitt (8) zunimmt oder abnimmt.

4. Optikeinheit (2) nach mindestens einem der vorhergehenden Ansprüche, **dadurch gekennzeichnet, dass** der mindestens eine Auskoppelabschnitt (12) des Lichtleitkörpers eine Mehrzahl an Auskoppelbereichen(14) umfasst, die jeweils stufen- und/oder sägezahnartig zueinander versetzt angeordnet sind und an denen mindestens eines des mindestens einen Optikelements (18) angeordnet sind.

5. Optikeinheit (2) nach Anspruch 4, **dadurch gekennzeichnet, dass** an jeweils einem Auskoppelbereich (14) eine Mehrzahl an Optikelementen (18) angeordnet ist, die das gleiche Brechungs- und/oder Reflexionsverhalten umfassen und/oder den gleichen Querschnitt umfassen.

6. Optikeinheit (2) nach Anspruch 4 oder 5, **dadurch gekennzeichnet, dass** der Lichtleiter entlang einer Haupterstreckungsrichtung (6) seine größte Erstreckung umfasst und dass die Auskoppelbereiche (14) bei gleichem oder abweichendem Abstand zum Einkoppelabschnitt (8) des Lichtleitkörpers eine gleiche bzw. jeweils eine unterschiedliche Neigung bezüglich der Haupterstreckungsrichtung (6) aufweisen.

7. Optikeinheit (2) nach mindestens einem der vorhergehenden Ansprüche, **dadurch gekennzeichnet, dass** die Neigung der Auskoppelbereiche (14) bezüglich der Haupterstreckungsrichtung (6) mit zunehmenden Abstand zunimmt und/oder dass die Querschnitte der Mehrzahl an Optikelementen (18) mit zunehmenden Abstand zum Einkoppelabschnitt (8) zunehmen.

8. Optikeinheit (2) nach mindestens einem der vorhergehenden Ansprüche, **dadurch gekennzeichnet, dass** der mindestens eine Einkoppelabschnitt (8) im Wesentlichen senkrecht zur Haupterstreckungsrichtung (6) des Lichtleitkörpers verlaufend angeordnet ist.

9. Optikeinheit (2) nach mindestens einem der vorhergehenden Ansprüche, **dadurch gekennzeichnet, dass** der Lichtleitkörper (4) und das Optikmittel (16) ein gemeinsames Bauteil, insbesondere Spritzgussteil, oder zwei separate und/oder separierbare Bauteile umfassen, insbesondere dass der Lichtleitkörper (4) ein Spritzgussteil und das Optikmittel (16) ein Spritzgussteil, eine Beschichtung und/oder eine Folie, umfasst.

10. Optikeinheit (2) nach mindestens einem der vorhergehenden Ansprüche, **dadurch gekennzeichnet, dass** der mindestens eine Auskoppelabschnitt (12) des Lichtleitkörpers eine Mehrzahl an Auskoppelbereichen (14) umfasst, die sägezahnartig zueinander versetzt angeordnet sind, wobei ein, dem Einkoppelabschnitt (8) nächstgelegener, erster Auskoppelbereich (14') bezüglich der Haupterstreckungsrichtung (6) einen ersten Neigewinkel umfasst, wobei ein an den ersten Auskoppelbereich (14') auf dessen dem Einkoppelbereich abgewandten Seite angrenzender zweiter Auskoppelbereich (14") bezüglich der Haupterstreckungsrichtung (6) einen zweiten Neigewinkel umfasst, wobei ein an den zweiten Auskoppelbereich (14") auf dessen dem Einkoppelbereich abgewandten Seite angrenzender dritter Auskoppelbereich (14'") bezüglich der Haupterstreckungsrichtung (6) einen dritten Neigewinkel umfasst, und/oder wobei ein an einen (n)ten Auskoppelbereich (14) auf dessen dem Einkoppelbereich abgewandten Seite angrenzender (n+1)ter Auskoppelbereich(14) bezüglich der Haupterstreckungsrichtung (6) einen (n+1) Neigewinkel umfasst.

11. Optikeinheit (2) nach mindestens einem der vorhergehenden Ansprüche, **dadurch gekennzeichnet, dass** das Optikelement (18) einen kreisbogenförmigen Querschnitt umfasst, insbesondere eine Kalotte, wobei mindestens ein, insbesondere mehrere, am ersten Auskoppelbereich (14') angeordnetes erstes Optikelement (18') einen ersten Radius umfasst, wobei mindestens ein, insbesondere mehrere, am zweiten Auskoppelbereich (14") angeordnetes zweites Optikelement (18") einen zweiten Radius umfasst, wobei mindestens ein, insbesondere mehrere, am dritten Auskoppelbereich (14'") angeordnetes drittes Optikelement (18'") einen dritten Radius umfasst, und/oder wobei mindestens ein, insbesondere mehrere, an einem (n)ten Auskoppelbereich angeordnetes (n)tes Optikelement (18) einen (n)ten Radius umfasst.

12. Anzeigeeinrichtung für ein Kraftfahrzeug, die insbesondere in einer Rückblickvorrichtung, wie Innen- oder Außenspiegel, anordenbar ist, mit mindestens einem Leuchtmittel (10) und mit mindestens einer Optikeinheit (2), insbesondere nach einem der Ansprüche 1 bis 11, die mindestens einen Lichtleitkörper, der mindestens einen Einkoppelabschnitt (8), durch den von mindestens einem Leuchtmittel (10) emittiertes Licht in den Lichtleitkörper (4) einkoppelbar, und der mindestens einen Auskoppelabschnitt (12) umfasst, durch den Licht aus dem Lichtleitkörper (4) auskoppelbar ist, und die mindestens ein Optikmittel (16) umfasst, das zumindest abschnittsweise den mindestens einen Auskoppelabschnitt (12) des Lichtleitkörpers flächenhaft überfangend am Lichtleitkörper (4) festlegbar oder festgelegt ist und das mindestens ein Optikelement (18) umfasst, durch welches ein Strahlengang zumindest des durch das Optikelement (18) hindurchtretenden Lichts umlenkbar und/oder in Lichtbündel aufteilbar, insbesondere streubar ist, **dadurch gekennzeichnet, dass** das Optikmittel (16) eine Mehrzahl an Optikelementen (18) umfasst, die sich in ihrem Brechungs- und/oder Reflexionsverhalten bei gleichem oder abweichendem Abstand zum Einkoppelabschnitt (8) des Lichtleitkörpers entsprechen und im anderen Fall unterscheiden.

13. Rückblickvorrichtung, wie Innen- oder Außenspiegel, mit mindestens einer Anzeigeeinrichtung, insbesondere nach Anspruch 12, und/oder mit mindestens einer Optikeinheit (2), insbesondere nach einem der Ansprüche 1 bis 11.

14. Kraftfahrzeug mit mindestens einer Rückblickvorrichtung, wie Innen- oder Außenspiegel, insbesondere nach Anspruch 13, mit mindestens einer Anzeigeeinrichtung, insbesondere nach Anspruch 12, und/oder mit mindestens einer Optikeinheit (2), insbesondere nach einem der Ansprüche 1 bis 11.
